# EUROPÄISCHE PATENTANMELDUNG

(11) **EP 1 460 429 A2**
(43) Veröffentlichungstag der Anmeldung: **22.09.2004**
(21) Anmeldenummer: 04006415.6
(22) Anmeldetag: 17.03.2004
(51) Int. Cl.: G01N 35/00, B01L 9/06, B65D 90/46, B65D 85/00

(54) **Probenbehandlungsgerät, insbesondere automatisches Analysegerät mit einer Gefässhalterungseinrichtung**

(30) Priorität: 19.03.2003 DE 10312197
(71) Anmelder: F. HOFFMANN-LA ROCHE AG, 4070 Basel (CH); Roche Diagnostics GmbH, 68305 Mannheim (DE)
(72) Erfinder: Sattler, Stephan, Dr., 82319 Starnberg (DE)
(74) Vertreter: Tiesmeyer, Johannes, Dr.

(57) **Zusammenfassung**

Es wird ein Probenbehandlungsgerät, insbesondere ein automatisches Analysegerät vorgeschlagen, welches wenigstens eine Gefäßhalterungseinrichtung (34) aufweist, die eine mit Aufnahmeöffnungen (30) zur Aufnahme von Probengefäßen oder Reaktionsgefäßen (14) versehene Halterungszone (32) umfasst, wobei die Oberfläche der Halterungszone (32) zumindest im Bereich der Aufnahmeöffnungen (30) von einem elektrisch gut leitenden und insbesondere nicht zur isolierenden Passivschichtbildung an der Luft neigenden Material gebildet - und vorzugsweise mit einem elektrischen Bezugspotential, insbesondere Massepotential, verbunden ist. Als elektrisch gut leitendes und insbesondere nicht zur isolierenden Passivschichtbildung neigendes Material kommt insbesondere Nickel oder eine Nickellegierung in Frage.

## Beschreibung

Die Erfindung betrifft ein Probenbehandlungsgerät, insbesondere automatisches Analysegerät, mit wenigstens einer Gefäßhalterungseinrichtung, die eine mit Aufnahmeöffnungen bzw. Vertiefungen zur Aufnahme von Gefäßen, insbesondere Probengefäßen, Reaktionsgefäßen, Reagenziengefäßen, Pipettenspitzen, Spritzenkörpern oder dgl. versehene Halterungszone aufweist.

Derartige Probenbehandlungsgeräte sind in diversen Ausgestaltungen bekannt. Zum Stand der Technik kann z.B. auf die EP 0 520 304 B1 und auf die EP 1 275 966 A1 verwiesen werden. Die vorstehend genannten Druckschriften offenbaren Analysegeräte zur automatischen Analyse von biologischem Probenmaterial, wie etwa Blutplasma, Serum, Urin usw. Solche Analysegeräte werden vielfach als nasschemische selektive Mehrparameter-Analyseautomaten bezeichnet. Beim Betrieb solcher Analysegeräte werden Probengefäße und Reaktionsgefäße zu Entnahmestationen bzw. Behandlungsstationen der Analysegeräte transportiert, wobei als Transportmittel gesteuert bewegbare X-Y-Z-Transportmechanismen, Greif-Schwenkarme sowie stufenweise oder kontinuierlich drehbare Gefäßhalterungsrotoren dienen. Zu den Behandlungsstationen gehören üblicherweise Pipettierstationen zum Einbringen von Proben und Reagenzien in Reaktionsgefäße, Mischstationen, Inkubatoren sowie Reagenz- und Messstationen. Die Messstation umfasst z.B. eine Fotometriestation, mittels welcher Lumineszenz- bzw. Fluoreszenzmessungen oder optische Absorptionsmessungen an dem mit Reagenzien zusammengeführten Probenmaterial nach Ablauf von Analysereaktionen zwischen dem Probenmaterial und den Reagenzien durchgeführt werden können. Es kommen auch andere Messprinzipien für die Probenanalyse in Frage, wie etwa die Detektion der Elektrochemolumineszenz.

Die hier betrachteten Probenbehandlungsgeräte weisen wenigstens eine Gefäßhalterungseinrichtung auf, welcher Gefäße, z.B. Probengefäße oder Reaktionsgefäße, zur Durchführung von Behandlungsschritten automatisch zugeführt und nach Beendigung der Behandlungsschritte wieder entnommen werden. Eine solche Gefäßhalterungseinrichtung kann z.B. eine Rotorscheibe mit einer Vielzahl von Aufnahmeöffnungen zur Aufnahme der Gefäße umfassen und in eine Inkubator-Einrichtung integriert sein, welche dazu dient, die in der Gefäßhalterungseinrichtung aufgenommenen Gefäße und deren Inhalt bei einer gewünschten Temperatur von z.B. 37°C zu thermostatisieren, um betreffende Reaktionen zwischen dem Probenmaterial und damit vermischten Reagenzien sicherzustellen bzw. zu erleichtern.

Die Probengefäße bzw. Reaktionsgefäße sind üblicherweise einseitig offene Kunststoffröhrchen oder ggf. Glasröhrchen. Die bekannten Gefäßhalterungseinrichtungen bestehen im Bereich der Halterungszonen überwiegend aus Aluminium. Zum Schutz vor Korrosion sind die Aluminiumteile normalerweiseweise eloxiert.

Bei einem Probenbehandlungsgerät mit solchen Gefäßhalterungszonen aus Aluminium und mit automatischer Bestückung der Halterungszonen mit Kunststoffgefäßen bzw. automatischer Entnahme der Kunststoffgefäße aus den Halterungszonen wurden Störeffekte bei der automatischen Handhabung und dem geräteinternen Transport der Gefäße, insbesondere bei der Positionierung der Gefäße in den Halterungszonen der Gefäßhalterungseinrichtungen beobachtet. Ein solcher Effekt bestand darin, dass Reagenzröhrchen nach dem Absetzen in den Aufnahmeöffnungen der Halterungszonen einer Gefäßhalterungseinrichtung nicht ohne weiteres in ihre Soll-Position in den Aufnahmeöffnungen einrückten bzw. nicht stabil in den Sollpositionen verblieben. Die genannten Effekte waren nur schwer zu reproduzieren, da sie stark von Umgebungsbedingungen im Labor abhängig waren. Die angesprochenen Effekte waren jedoch gelegentlich Ursache von massiven Störungen bei der automatischen Handhabung der Gefäße.

Aufgabe der vorliegenden Erfindung ist es, ein Probenbehandlungsgerät der eingangs genannten Art bereitzustellen, bei dem die automatische Handhabung der Probengefäße weniger störanfällig als bisher ist.

Zur Lösung dieser Aufgabe wird erfindungsgemäß vorgeschlagen, dass die Oberfläche der Halterungszone der Gefäßhalterungseinrichtung zumindest im Bereich der Aufnahmeöffnungen von einem elektrisch gut leitenden und insbesondere nicht zur elektrisch isolierenden Passivschichtbildung an der Luft neigenden Material gebildet - und vorzugsweise mit einem elektrischen Bezugspotential, insbesondere Massepotential, verbunden ist.

Es wurde bei der Entwicklung des erfindungsgemäßen Probenbehandlungsgerätes erkannt, dass die nur schwer zu reproduzierenden Störeffekte bei der automatischen Handhabung und Positionierung der Probengefäße bzw. Reaktionsgefäße auf elektrostatische Kraftwirkungen zurückzuführen sind.

Bei den Kunststoff-Gefäßen kommt es leicht zur elektrostatischen Aufladung, etwa durch Reibungselektrizität bei der Handhabung und beim Transport. Elektrostatische Aufladung erfahren die Gefäße häufig auch schon bei der Herstellung und bei ihrer Verpackung. Bei den bekannten Probenbehandlungsgeräten mit Gefäßhalterungszonen aus eloxiertem Aluminium kommt es vor, dass die elektrisch nicht leitenden Eloxalschichten ebenfalls in nicht determinierter Weise elektrostatisch aufgeladen sind, so dass es zu unerwünschten elektrostatischen Kräften zwischen Gefäßhalterungszone und Probengefäßen kommen kann, wobei solche elektrostatischen Kräfte das Positionieren der Probengefäße in den Aufnahmeöffnungen der Gefäßhalterungszonen erschweren.

Bei dem Probenbehandlungsgerät nach der vorliegenden Erfindung ist die Oberfläche der Halterungszone jedoch im Bereich der Aufnahmeöffnungen von einem elektrisch gut leitenden und insbesondere nicht zur elektrisch isolierenden Passivschichtbildung an der Luft neigenden Material gebildet. Damit liegt ein sehr kleiner elektrischer Oberflächenwiderstand im Bereich der Halterungszone vor, so dass stets Ladungsausgleich an der Oberfläche der Halterungszone im Bereich der Aufnahmeöffnungen stattfinden kann und die Oberfläche elektrisch geerdet werden kann. Vorzugsweise ist die Oberfläche der Halterungszone demgemäß mit einem elektrischen Bezugspotential, insbesondere Massepotential, d.h. Erdpotential verbunden. Die erfindungsgemäß vorgeschlagenen Maßnahmen stellen auch sicher, dass der elektrische Übergangswiderstand zwischen einem Probengefäß in einer Aufnahmeöffnung und der Oberfläche der Halterungszone klein ist, so dass Ladungsausgleich zwischen Probengefäßen und Halterungszone wirksamer als bisher stattfinden kann, um die oben angesprochenen elektrostatischen Störeffekte zu unterdrücken.

Vorzugsweise ist das Oberflächenmaterial der Halterungszone Nickel oder eine Nickellegierung.

Nickel hat sich als sehr korrosionsbeständig erwiesen und neigt nicht zur spontanen Bildung einer elektrisch isolierenden Oxidschicht bzw. Passivschicht in einer für die hier betrachteten Probenbehandlungsgeräte typischen Atmosphäre. Die gute Oberflächenleitfähigkeit bleibt somit dauerhaft erhalten. Zwar könnte die Halterungszone insgesamt aus Nickel gefertigt sein, was jedoch aus Kostengründen uninteressant sein dürfte.

Vielmehr ist es zweckmäßig, dass die Halterungszone einen Grundkörper aus einem geeigneten preiswerten Material aufweist, der mit einer Oberflächenschicht aus dem elektrisch gut leitenden und nicht zur isolierenden Passivschichtbildung neigenden Material, vorzugsweise Nickel, versehen ist. Als Material für den Grundkörper kommt insbesondere Aluminium bzw. eine Aluminiumlegierung in Frage, wobei dieser Grundkörper zumindest im Bereich der Aufnahmeöffnungen für die Probengefäße eine insbesondere durch galvanisches Vernickeln, chemisches Vernickeln, Vernickeln nach Plasmaverfahren oder/und Plattieren hergestellte Nickel-Oberflächenschicht aufweist.

Durch die Vernickelung kann eine elektrisch sehr gut leitende Oberfläche auf Aluminium erzeugt werden, wobei die Korrosionsbeständigkeit der vernickelten Aluminiumbauteile sehr gut ist. Das Vernickeln von Aluminium ist kaum kostenaufwendiger als das Eloxieren des Aluminiums.

Als Materialien für die Grundkörper kommen auch Leichtmetalle wie z.B. Magnesium in Frage. Auch Grundkörper aus Kunststoff mit einer dauerhaft hoch leitenden Oberflächenbeschichtung z.B. aus Nickel können als Halterungszonen nach der Erfindung herangezogen werden.

Gemäß einer besonders bevorzugten Ausführungsform der Erfindung weist das Probenbehandlungsgerät einen die Gefäßhalterungseinrichtung umfassenden Inkubator auf.

Auch Gefäßhalterungszonen in Mischerstationen und Messstationen weisen vorzugsweise eine dauerhaft hoch leitende Oberfläche auf, die elektrisch geerdet ist.

Die vorliegende Erfindung kann verallgemeinert werden auf Behandlungsgeräte, bei denen kleine Kunststoffteile verarbeitet und transportiert werden sollen. Halterungseinrichtungen mit Aufnahmeöffnungen für solche Kunststoffteile wären dann entsprechend zu vernickeln bzw. mit einer Oberfläche aus einem elektrisch gut leitenden und insbesondere nicht zur isolierenden Passivschichtbildung an Luft neigenden Material zu versehen.

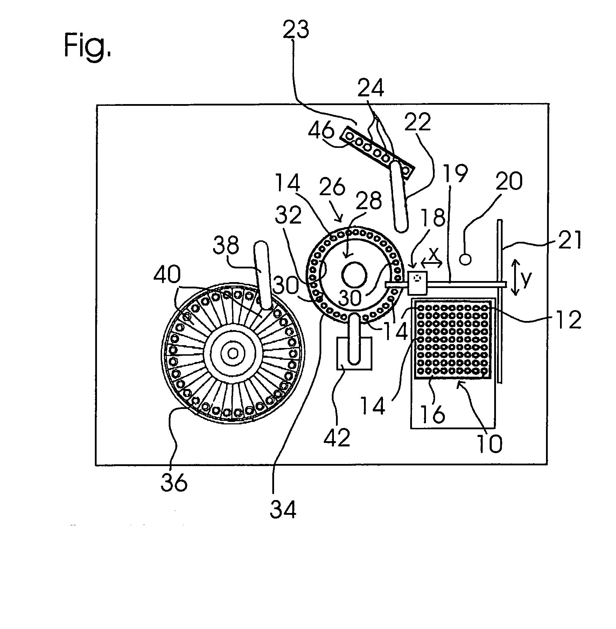

In der beiliegenden Figur ist in einer Draufsicht ein vollautomatisch gesteuertes Analysegerät als Beispiel eines Probenbehandlungsgerätes nach der Erfindung vereinfacht und teils schematisch dargestellt.

Das Analysegerät weist eine Zuführstation 10 für die Bereitstellung von sterilen Pipettenspitzen 12 und Reagenzgläschen 14 auf einem Träger 16 auf. Die in einer Array-Anordnung auf dem Träger 16 verfügbaren Pipettenspitzen 12 und Reagenzgläschen 14 sind Einwegartikel, d.h. sie werden nach Gebrauch entsorgt.

Ein X-Y-Transportmechanismus 18 kann unter Kontrolle einer Steuereinrichtung längs der X-Schiene 19 in X-Richtung und zusammen mit der X-Schiene 19 längs der Y-Schiene 21 in Y-Richtung bewegt werden, so dass er jeden Array-Platz des Trägers 16 erreichen kann, um gezielt eine Pipettenspitze 12 oder ein Reagenzgläschen 14 von dem Träger 16 aufzugreifen. Eine Pipettenspitze 12 wird jeweils in eine Montagebereitschaftsposition bei 20 eingebracht, aus der heraus sie von dem entsprechend zu positionierenden Pipettierarm 22 in Eingriff genommen werden kann. Der Pipettierarm 22 kann dann in die in der Figur gezeigte Probenaufnahmestellung zu einer Probenbereitstellungsstation 23 verschwenkt werden. In der Probenaufnahmestellung greift der Pipettierarm 22 mit der neu aufgenommenen Pipettierspitze in eines der in der Probenbereitstellungsstation 23 bereitgestellten Probengefäße 24 ein, um darin befindliches biologisches Probenmaterial aufzunehmen.

Der X-Y-Transportmechanismus 18 dient ferner dazu, Reagenzgläschen 14 zu einem Reaktionsbereich 26, der einen Inkubator 28 aufweist, zu transportieren und dort in einer Aufnahmeöffnung 30 in der ringförmigen Halterungszone 32 des schrittweise drehbaren Gefäßhalterungsrotors 34 zu positionieren.

Der Pipettierarm 22 kann nach Ausführung einer Schwenkbewegung zu dem Reaktionsbereich 26 das aus einem betreffenden Probenbehälter 24 aufgenommene biologische Probenmaterial einem Reagenzgläschen 14 zuführen, welches in einer Aufnahmeöffnung 30 in der Halterungszone 32 des Probenhalterungsrotors 34 positioniert ist.

Eine Reagenzienstation 36 hält eine Vielzahl von Reagenzien bereit, welche nach Maßgabe des Analyseprogramms selektiv dem Probenmaterial in betreffenden Reagenzgläschen 14 im Reaktionsbereich 26 beigegeben werden können. Zur Überführung von Reagenzien zwischen dem Reagenzienbereich 36 und dem Reaktionsbereich 26 dient der verschwenkbare Pipettierarm 38. Bei der Reagenzienstation handelt es sich um einen Rotor mit einer Vielzahl von Reagenziengefäßen 40. Aufgrund der Drehbarkeit des Reagenzienrotors 36 kann jedes einzelne Reagenziengefäß in eine Stellung verbracht werden, in welcher es von dem Pipettierarm 38 bzw. der daran befindlichen Pipettierspitze erreichbar ist.

An dem Reaktionsbereich 26 ist eine Messstation 42 vorgesehen, mittels welcher fotometrische oder sonstige Messungen an dem mit Reagenzien versetzten Probenmaterial durchgeführt werden können.

Gemäß der vorliegenden Erfindung sind insbesondere die Halterungszone 32 der Probenhalterungseinrichtung 34 und der Halterungsbereich 46 für die Probengefäße 24 in der Probenbereitstellungsstation 23 mit einer Oberflächenschicht aus Nickel versehen, die elektrisch geerdet ist. Der vernickelte Grundkörper des Gefäßhalterungsrotors 34 besteht im Übrigen aus Aluminium.

Die oben erläuterten Störeffekte aufgrund elektrostatischer Kräfte können mit einer solchen hochleitenden Nickel-Oberflächenschicht weitgehend unterdrückt werden. Beim Absetzen der Reagenzgläschen 14 in den Öffnungen 30 des Probenhalterungsrotors 34 finden die Reagenzgläschen 14 sehr schnell ihre definierte Sollposition, d.h. die betreffenden Reagenzgläschen werden nicht mehr von elektrostatischen Kräften aus ihrer Sollposition verdrängt.

Alternativ zu Nickel kommen auch andere Materialien als dauerhaft hochleitende Oberflächenmaterialien für die Beschichtung von Gefäßhalterungszonen in Frage, insbesondere Edelmetalle, wie etwa Gold, Silber, Titan. Auch Chrom kommt als dauerhaft an der Oberfläche leitfähiges und geringen Übergangswiderstand aufweisendes Material für die Halterungszonen in Frage.

Im Rahmen der Erfindung sollen unter den Begriff Gefäßhalterungseinrichtung auch Transporteinrichtungen wie Greifer oder dgl. fallen, mit denen die betreffenden Gefäße in Kontakt kommen. So wird erfindungsgemäß vorgeschlagen, dass z.B. auch die Gefäßberührungsflächen von solchen Transporteinrichtungen eine dauerhaft leitende Oberfläche haben, die elektrisch geerdet ist.

## Patentansprüche

1. Probenbehandlungsgerät, insbesondere automatisches Analysegerät, mit wenigstens einer Gefäßhalterungseinrichtung (34), die eine mit Aufnahmeöffnungen (30) zur Aufnahme von Gefäßen, insbesondere Probengefäßen, Reaktionsgefäßen, Reagenziengefäßen, Pipettenspitzen, Spritzenkörpern oder dgl. (14) versehene Halterungszone (32) aufweist,
**dadurch gekennzeichnet,**
**dass** die Oberfläche der Halterungszone (32) zumindest im Bereich der Aufnahmeöffnungen (30) von einem elektrisch gut leitenden und insbesondere nicht zur elektrisch isolierenden Passivschichtbildung an der Luft neigenden Material gebildet - und vorzugsweise mit einem elektrischen Bezugspotential, insbesondere Massepotential, verbunden ist.

2. Probenbehandlungsgerät nach Anspruch 1, **dadurch gekennzeichnet, dass** das Oberflächenmaterial der Halterungszone (32) zumindest im Bereich der Aufnahmeöffnungen (30) Nickel oder eine Nickellegierung ist.

3. Probenbehandlungsgerät nach Anspruch 1 oder 2, **dadurch gekennzeichnet, dass** die Halterungszone (32) einen Grundkörper aufweist, der mit einer Oberflächenschicht aus dem elektrisch gut leitenden und insbesondere nicht zur isolierenden Passivschichtbildung neigenden Material, vorzugsweise Nickel, versehen ist.

4. Probenbehandlungsgerät nach Anspruch 3, **dadurch gekennzeichnet, dass** der Grundkörper aus Kunststoff oder/und aus Aluminium oder einer Aluminiumlegierung gebildet ist.

5. Probenbehandlungsgerät nach einem der vorhergehenden Ansprüche, **dadurch gekennzeichnet, dass** die Halterungszone (32) zumindest im Bereich der Aufnahmeöffnungen (30) eine durch galvanisches Vernickeln, chemisches Vernickeln, Plasmaauftrag oder/und Plattieren hergestellte Nickel-Oberflächenschicht aufweist.

6. Probenbehandlungsgerät nach einem der vorhergehenden Ansprüche, **dadurch gekennzeichnet, dass** es einen die Probenhalterungseinrichtung (34) umfassenden Inkubator (28) aufweist.

7. Probenbehandlungsgerät nach einem der vorhergehenden Ansprüche, **dadurch gekennzeichnet, dass** das elektrisch gut leitende und insbesondere nicht zur elektrisch isolierenden Passivschichtbildung neigende Material Gold, Silber, Titan oder/und Chrom umfasst.
